# EUROPÄISCHE PATENTSCHRIFT

(11) **EP 1 645 767 B1**
(45) Veröffentlichungstag und Bekanntmachung des Hinweises auf die Patenterteilung: **05.12.2007**
(21) Anmeldenummer: 05020856.0
(22) Anmeldetag: 24.09.2005
(51) Int. Cl.: F16D 25/08

(54) **Befestigungselemente**
Fixing element
Elément de fixation

(30) Priorität: 06.10.2004 GB 0422185
(43) Veröffentlichungstag der Anmeldung: 12.04.2006
(73) Patentinhaber: LuK Lamellen und Kupplungsbau Beteiligungs KG, 77815 Bühl (DE)
(72) Erfinder: Le Clos Gobert, Filipe Franco, 45800 St Jean de Braye (FR)

(56) Entgegenhaltungen:
- DE-A1- 4 313 346
- DE-A1- 19 755 494
- US-A1- 2003 029 692

## Beschreibung

Die vorliegende Erfindung betrifft Befestigungselemente und insbesondere Befestigungselemente zum Sichern einer Kupplungsbetätigungseinheit in ihrer Arbeitsstellung in einem Fahrzeug.

Seit langem besteht ein Bedarf an einem einfach auszuführenden und kostengünstigen Verfahren zum Befestigen einer Kupplungsbetätigungseinheit in ihrer Arbeitsstellung, wobei die Betätigungseinheit für Wartungsarbeiten usw. auch einfach wieder gelöst werden kann.

Die Aufgabe der vorliegenden Erfindung besteht darin, eine hydraulische Kupplungsbetätigungseinheit mit einer verbesserten Befestigungsform bereitzustellen.

Dokument DE-A-4313346 zeigt eine Kupplungsbetätigungseinheit nach dem Oberbegriff des Anspruchs 1.

Gemäß der vorliegenden Erfindung wird daher eine hydraulische Kupplungsbetätigungseinheit bereitgestellt, welche einen Grundkörper mit einem in einer Bohrung beweglichen Kolben umfasst, wodurch eine Kammer mit einer unter Druck zu setzenden Hydraulikflüssigkeit definiert wird, wobei am Grundkörper ein oder mehrere Befestigungsfüße gebildet sind und jeder Befestigungsfuß einen durch eine im Befestigungsfuß befindliche Bohrung ragenden Befestigungsstift beinhaltet, wobei jeder Befestigungsstift einen sägezahnförmigen Abschnitt, der sich griffig mit einer Bohrung in einem Bauteil verbindet, an welchem die Betätigungseinheit befestigt werden soll, und ferner einen Kopfteil mit ersten Auflageflächenabschnitten aufweist, welche in der Befestigungsposition des Befestigungsstiftes auf zweiten Auflageflächenabschnitten auf dem umgebenden Befestigungsfuß aufliegen, wobei der Befestigungsstift in Längsrichtung durch die Bohrung im Befestigungsfuß geschoben und in seine Befestigungsposition gebracht wird, sodass er sich griffig mit der Bohrung des Bauteils verbindet, und ferner zum Abbauen der Betätigungseinheit von dem Bauteil durch Drehung des Befestigungsstiftes gegenüber dem Befestigungsfuß teilweise zurückgezogen wird, um den Befestigungsstift durch Ausrasten des ersten und zweiten Auflageflächenabschnitts aus dem Befestigungsfuß herauszuziehen.

Die Auflageflächenabschnitte sowohl am Befestigungsfuß als auch am Befestigungsstift können im Wesentlichen ebene Flächen sein, die im Allgemeinen rechtwinklig zueinander angeordnet sind, sodass eine relative Drehung der aufeinander liegenden Auflageflächenabschnitte zu einer axialen Verschiebung des Befestigungsstiftes vom Befestigungsfuß weg führt.

Der Kopf jedes Befestigungsstiftes ist vorzugsweise mit einem Innensechskantprofil, einem Schlitz oder einem anderen Profil versehen, in welches zum Drehen des Befestigungsstiftes ein geeignetes Werkzeug gesteckt werden kann.

Im Folgenden wird die vorliegende Erfindung anhand eines Beispiels und unter Bezug auf die beiliegenden Zeichnungen beschrieben, wobei:

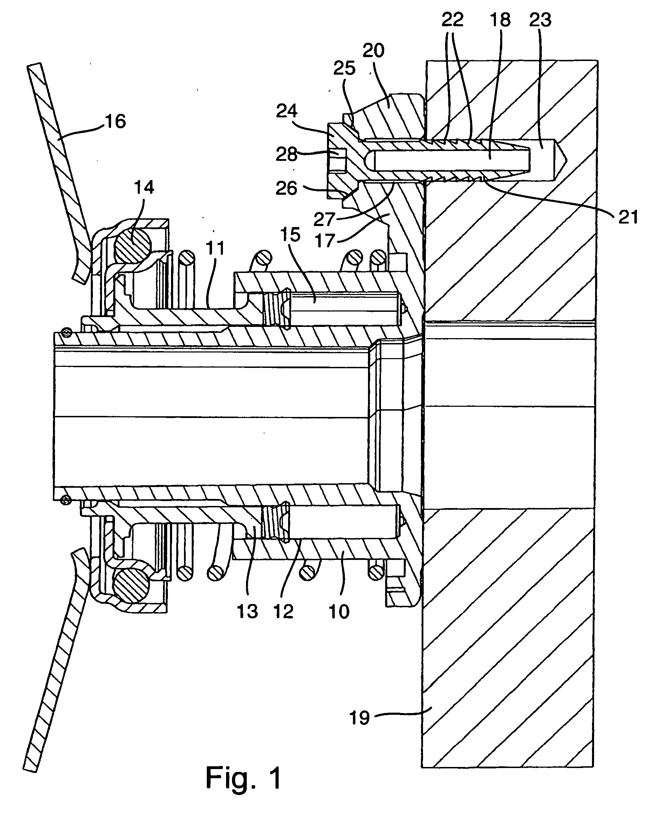

Figur 1 einen Querschnitt durch einen konzentrischen Nehmerzylinder mit dem Befestigungselement der vorliegenden Erfindung zeigt;
Figur 2 eine perspektivische Ansicht eines Teils des konzentrischen Nehmerzylinders von Figur 1 und des zugehörigen Befestigungsstiftes zeigt;
Figur 3 perspektivische Ansichten des Befestigungsstiftes und des Befestigungsfußes am konzentrischen Nehmerzylinder darstellt, welche die ebenen Auflageflächen zeigen; und
Figuren 4 und 5 Einbauphasen beim Anbringen des Nehmerzylinders in seine Arbeitsstellung am Fahrzeug zeigen.

Die Figuren zeigen einen konzentrischen Nehmerzylinder (Concentric Slave Cylinder, CSC) 10 gemäß der vorliegenden Erfindung, der einen Grundkörper 11 mit einer ringförmigen Bohrung 12 aufweist, in welcher ein ringförmiger Kolben 13 gleitend gelagert ist. Der Kolben 13 verschiebt ein Ausrücklager 14, wenn die Arbeitskammer 15 über eine (in den Zeichnungen nicht sichtbare) Einlassöffnung unter Druck gesetzt wird, die durch eine Leitung mit einem (nicht gezeigten) Geberzylinder verbunden ist.

Durch den erhöhten Druck in der Arbeitskammer 15 wird der Kolben 13 auf bekannte Weise nach links verschoben, der wiederum das Ausrücklager 14 verschiebt und durch Betätigung einer zugehörigen Kupplungsmembranfeder 16 die zugehörige Fahrzeugkupplung trennt.

Gemäß der vorliegenden Erfindung ist der Grundkörper 11 des CSC mit zwei oder mehr Befestigungsfüßen 17 versehen, durch welche die Befestigungsstifte 18 ragen und den CSC an einem Teil eines zugehörigen Getriebekastens 19 befestigen, an dem der CSC angebracht werden soll.

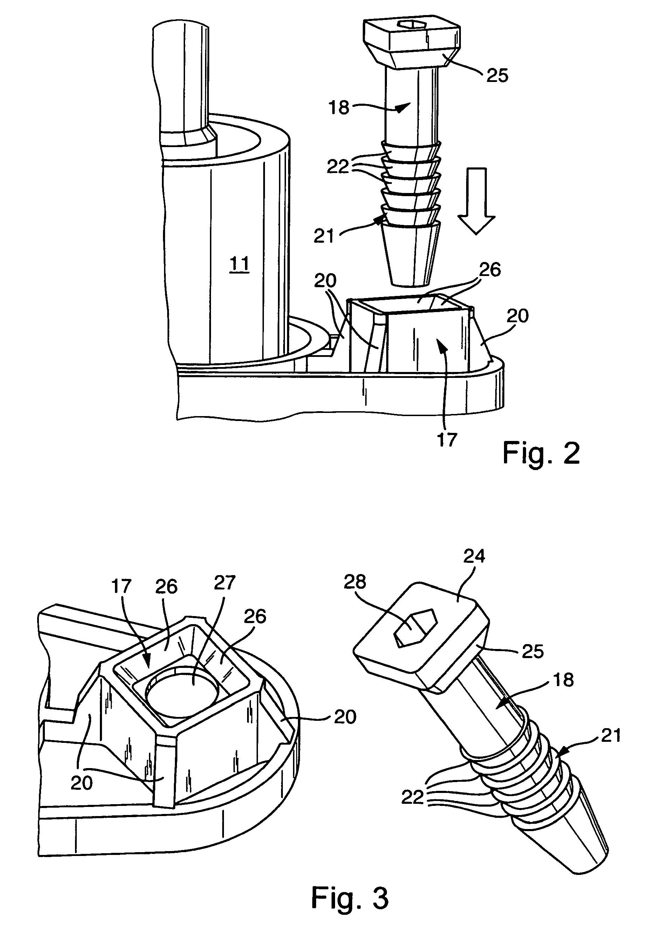

Figur 3 zeigt sehr deutlich, dass jeder Befestigungsfuß 17 zusammen mit dem Gehäuse 11 des CSC ein gemeinsames Gussteil bildet, wobei sich auf dem Befestigungsfuß Verstärkungsrippen 20 zur Verbesserung der Festigkeit der Struktur befinden. Die Befestigungsstifte 18 weisen jeweils einen sägezahnförmigen Abschnitt 21 mit einer Vielzahl von einzelnen sägezahnförmigen Erhebungen 22 auf, die so gestaltet sind, dass sie an der Innenfläche einer Bohrung 23 im Getriebekasten 19 festgehakt werden, an welchem der CSC angebracht werden soll. Die Bohrung 23 kann mit einem Gewinde versehen, aber auch glatt sein. Jeder Befestigungsstift weist auch einen Kopfteil 24 mit ersten Auflageflächen 25 auf, die an seiner Unterseite gebildet sind. Bei der gezeigten Anordnung sind die Auflageflächen eben und verleihen zusammen dem Kopfteil eine im Allgemeinen quadratische Form. Am Befestigungsfuß 17 befinden sich entsprechende zweite, im Allgemeinen ebene Auflageflächen 26, welche um eine Bohrung 27 im Befestigungsfuß herum angeordnet sind und durch die der passende Befestigungsstift 18 gesteckt ist. Der Kopfteil ist auch mit einem Profil 28 versehen, damit der Befestigungsstift gemäß der folgenden Beschreibung gedreht werden kann. Dieses Profil kann eine beliebige geeignete Form aufweisen, zum Beispiel ein Innensechskantprofil gemäß der Abbildung oder einen Schlitz, in den ein Schraubendreher oder ein anderes Werkzeug zum Drehen des Befestigungsstiftes gesteckt werden kann.

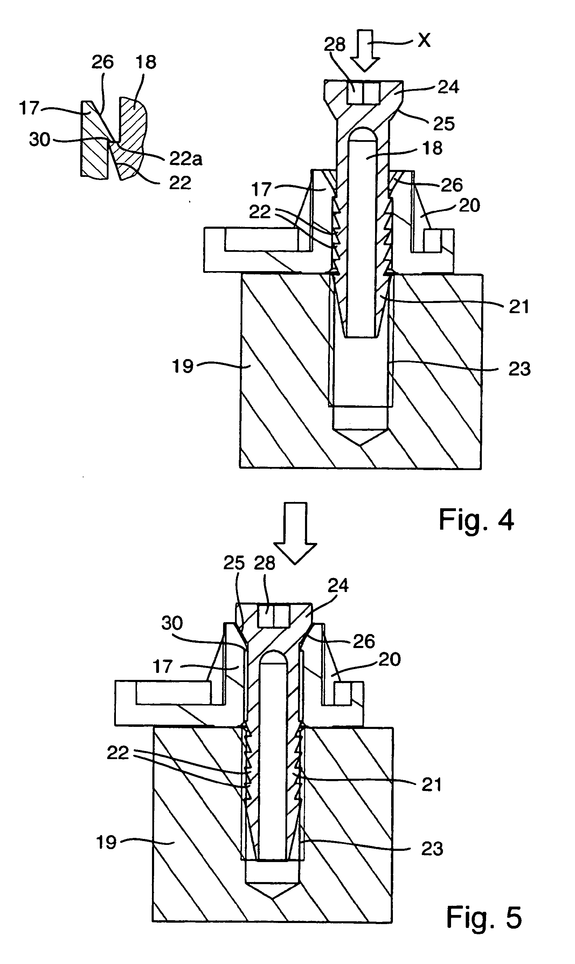

Die Figuren 4 und 5 zeigen verschiedene Phasen beim Befestigen des CSC am Getriebekasten 19. In Figur 4 ist der Befestigungsstift 17 durch die Bohrung 27 des betreffenden Befestigungsfußes 17 gesteckt worden, wodurch die sägezahnförmigen Erhebungen 22 so verformt werden, dass der Befestigungsstift durch den Kontakt zwischen der Schulter 22a der oberen sägezahnförmigen Erhebung 22 und der am Ende der Bohrung 27 neben den zweiten Auflageflächen 26 des Befestigungsfußes um die Bohrung herum gebildeten Ausdrehung 30 wirksam in der Bohrung 27 festgehalten wird.

Sobald sich alle Befestigungsstifte in der in Figur 4 gezeigten Stellung befinden, werden die Enden der Befestigungsstifte in ihre zugehörigen Bohrungen 23 im Getriebekasten 19 gesteckt und dann entsprechend dem Pfeil X in Figur 4 so weit in axialer Richtung gedrückt, dass sie sich in der Position von Figur 5 befinden, in welcher sich die sägezahnförmigen Erhebungen griffig mit der Bohrung 23 verbinden und so den CSC in seiner gewünschten Arbeitsstellung festhalten.

Um den CSC wieder aus seiner Arbeitstellung zu entfernen, wird ein Werkzeug wie beispielsweise ein Innensechskantschlüssel in das Profil 28 gesteckt und jeder Befestigungsstift gedreht. Dadurch werden die ersten und zweiten Auflageflächen 25 und 26 ausgerastet und die Befestigungsstifte in axialer Richtung so weit aus den entsprechenden Befestigungsfüßen herausgehoben, dass die Köpfe der Befestigungsstifte mit einem Ausziehwerkzeug gefasst und so weit aus den betreffenden Bohrungen 23 gezogen werden können, bis sich die Befestigungsstifte in der Stellung von Figur 4 befinden und der CSC von seiner Arbeitsstellung entfernt werden kann.

Somit stellt die vorliegende Erfindung ein einfaches und kostengünstiges Verfahren zum Befestigen des CSC in seiner Arbeitsstellung bereit, bei dem keine Spezialwerkzeuge zum Anbringen des CSC erforderlich sind und der CSC mit normalen Handwerkzeugen wieder abgenommen werden kann.

Obwohl die Erfindung oben in Bezug auf einen konzentrischen Nehmerzylinder beschrieben wurde, ist klar, dass sie auch für beliebige Arten von hydraulischen Betätigungseinheiten verwendet werden kann, unabhängig davon, ob sie als Nehmerzylinder oder als Geberzylinder fungieren oder aus Metall oder aus Kunststoff hergestellt sind.

## Patentansprüche

1. Hydraulische Kupplungsbetätigungseinheit, welche einen Grundkörper (11) mit einem in einer Bohrung beweglichen Kolben (13) umfasst, wodurch eine Kammer (15) mit einer unter Druck zu setzenden Hydraulikflüssigkeit definiert wird, wobei am Grundkörper (11) ein oder mehrere Befestigungsfüße (17) gebildet sind und jeder Befestigungsfuß (17) einen durch eine im Befestigungsfuß (17) befindliche Bohrung (27) ragenden Befestigungsstift (18) beinhaltet, wobei jeder Befestigungsstift (18) einen sägezahnförmigen Abschnitt (21), der sich griffig mit einer Bohrung (23) in einem Bauteil (19) verbindet, an welchem die Betätigungseinheit (19) befestigt werden soll, **dadurch gekennzeichnet daß** der Befestigungsstift einen Kopfteil mit ersten Auflageflächenabschnitten (25) aufweist, welche in der Befestigungsposition des Befestigungsstiftes (18) auf zweiten Auflageflächenabschnitten (26) auf dem umgebenden Befestigungsfuß (17) aufliegen, wobei der Befestigungsstift (18) in Längsrichtung durch die Bohrung (27) im Befestigungsfuß (17) geschoben und in seine Befestigungsposition gebracht wird, sodass er sich mit der Bohrung (23) des Bauteils (19) griffig verbindet, und ferner zum Abbauen der Betätigungseinheit von dem Bauteil (19) durch Drehung des Befestigungsstiftes (18) gegenüber dem Befestigungsfuß (17) teilweise zurückgezogen wird, um den Befestigungsstift (18) durch Ausrasten des ersten (25) und zweiten (26) Auflageflächenabschnitts aus dem Befestigungsfuß (17) herauszuziehen.

2. Hydraulische Betätigungseinheit nach Anspruch 1, **dadruch gekennzeichnet, dass** die Auflageflächen (25,26) sowohl am Befestigungsfuß (17) als auch am Befestigungsstift (18) im Wesentlichen ebene Flächen (25) sind, die im Allgemeinen rechtwinklig zueinander angeordnet sind, sodass ein Verdrehen der aufeinandersitzenden Auflageflächen (25,26) gegeneinander zu einer axialen Verschiebung des Befestigungsstifts (18) vom Befestigungsfuß (17) weg führt.

3. Hydraulische Betätigungseinheit nach Anspruch 1 oder 2, **dadurch gekennzeichnet, dass** jeder Befestigungsstift (18) mit einem Innensechskantprofil (28), einem Schlitz oder einem anderen Profil versehen ist, in welches ein geeignetes Werkzeug gesteckt werden kann, um den Befestigungsstift (18) zu drehen.

## Claims

1. Hydraulic clutch operating unit, which includes a basic body (11) having a piston (13) that is movable in a drilled hole, whereby a chamber (15) with a hydraulic fluid that is to be placed under pressure is defined, where one or more mounting feet (17) are formed on the basic body (11) and each mounting foot (17) contains a fastening pin (18) that extends through a drilled hole (27) located in the mounting foot (17), where each fastening pin (18) has a saw-tooth-shaped section (21) which connects with good adherence with a drilled hole (23) in a component (19) to which the operating unit (19) is to be attached, **characterized in that** the fastening pin has a head part with first contact surface sections (25) that lie on second contact surface sections (26) on the surrounding mounting foot (17) in the fastening position of the fastening pin (18), the fastening pin (18) being pushed in the longitudinal direction through the drilled hole (27) in the mounting foot (17) and brought into its fastening position, so that it connects with good adherence to the drilled hole (23) of the component (19), and furthermore to dismantle the operating unit is partially withdrawn from the component (19) by rotating the fastening pin (18) in relation to the mounting foot (17), in order to withdraw the fastening pin (18) from the mounting foot (17) by disengaging the first (25) and second (26) contact surface sections from the mounting foot (17).

2. Hydraulic clutch operating unit according to Claim 1, **characterized in that** the contact surfaces (25, 26) on both the mounting foot (17) and the fastening pin (18) are essentially flat surfaces (25) which are generally situated at right angles to each other, so that twisting the contact surfaces (25, 26) lying on top of each other relative to each other results in an axial movement of the fastening pin (18) away from the mounting foot (17).

3. Hydraulic operating unit according to Claim 1 or 2, **characterized in that** each fastening pin (18) is provided with an internal hexagonal profile (28), a slot, or some other profile, into which a suitable tool may be inserted to turn the fastening pin (18).

## Revendications

1. Unité d'actionnement d'embrayage hydraulique comprenant un corps de base (11) avec un piston (13) mobile dans un alésage, qui définit une chambre (15) avec un liquide hydraulique à mettre sous pression, sur le corps de base (11) un ou plusieurs pieds de fixation (17) étant formés et chaque pied de fixation (17) comprenant une tige de fixation (18) traversant un alésage situé dans le pied de fixation (17), chaque tige de fixation (18) présentant un segment en forme de dents de scie (21) qui s'engrène dans un alésage (23) dans un composant (19) auquel l'unité d'actionnement doit être fixée, **caractérisée en ce que** la tige de fixation présente une partie de tête avec des premiers segments de surface d'appui (25) placés dans la position de fixation de la tige de fixation (18) sur des deuxièmes segments de surface d'appui (26) du pied de fixation (17) entourant, la tige de fixation (18) étant poussée dans la direction longitudinale à travers l'alésage (27) dans le pied de fixation (17) et mise dans sa position de fixation, de sorte qu'elle s'engrène dans l'alésage (23) du composant (19) et dans le but de démonter l'unité d'actionnement du composant (19) par une rotation de la tige de fixation (18) par rapport au pied de fixation (17), la tige de fixation (18) peut être retirée partiellement (18) du pied de fixation (17) par décliquetage du premier et du deuxième segment de surface d'appui (26).

2. Unité d'actionnement hydraulique selon la revendication 1, **caractérisée en ce que** les surfaces d'appui (25, 26) aussi bien au pied de fixation (17) qu'à la tige de fixation (18) sont des surfaces planes (25) qui sont généralement disposées à angle droit l'une par rapport à l'autre de sorte qu'une rotation des surfaces d'appui (25, 26) placées l'une sur l'autre entraîne un éloignement axial de la tige de fixation (18) du pied de fixation (17).

3. Unité d'actionnement hydraulique selon la revendication 1 ou 2, **caractérisée en ce que** chaque tige de fixation (18) est munie d'un profil à six pans creux (28), d'une fente ou d'un autre profil dans lequel on peut insérer un outil approprié pour tourner la tige de fixation (18).
